# EUROPEAN PATENT APPLICATION

(11) **EP 0 993 943 A2**
(43) Date of publication of application: **19.04.2000**
(21) Application number: 99120543.6
(22) Date of filing: 15.10.1999
(51) Int. Cl.: B32B 27/08, B44C 5/04

(54) **Laminate employing liquid resistant film**

(30) Priority: 19.04.1999 US 294723; 16.10.1998 US 173065
(71) Applicant: Premark RWP Holdings, Inc., Wilmington, Delaware 19801 (US)
(72) Inventor: Krebs, Robert R., Georgetown, Texas 78628 (US); Nelson, Thomas J., Belton, Texas 76513 (US); Williams, Joel Lane, Pendleton, Texas 76564 (US); Marshall, Donald Murray, Temple, Texas 76504 (US); Pruitt, David Wayne, Temple, Texas 76504 (US); Stolarski, Victoria Lynn, Austin, Texas 78728 (US); Mafoti, Robson, Temple, Texas 76501 (US); Soudelier, Earl, Gatesville, Texas 76528 (US)
(74) Representative: Frohwitter, Bernhard, Dipl.-Ing.

(57) **Abstract**

A laminate panel having desired characteristics even though the materials having these desired characteristics are not compatible in at least one aspect, is disclosed . One of the substances having the desired characteristics may be moved away from the other substance and a different substance compatible with the substances may be used between the two substances. For example, the laminate panel includes a liquid impermeable layer that substantially prevents the penetration of moisture. The panel also includes a layer of a balancing substance disposed close to the liquid impermeable layer to balance another layer of the laminate panel. A kraft paper sheet coated with the balancing substance on one side and a substance providing good bonding with the liquid impermeable layer on the other side, may be used to provide the desired balancing characteristic.

## Description

The present application is related to co-pending and commonly assigned U.S. Application Serial No. 09/173,065, entitled "LAMINATE", filed October 16, 1998, which is incorporated herein by reference. The present application is also related to co-pending and commonly assigned U.S. Application Serial No. 09/267,493, entitled "SYSTEM AND METHOD FOR TWO SIDED SHEET TREATING", filed March 12, 1999, which is also incorporated herein by reference. The present application is also related to co-pending and commonly assigned U.S. Application Serial No. 09/249,033, entitled "PIGMENTED BACKER FILM AND METHOD OF PRODUCTION", filed February 11, 1999, which is also incorporated herein by reference. The present application is also related to co-pending and commonly assigned U.S. Application Serial No. 09/226,572, entitled "SYSTEM AND METHOD FOR ADHERING LAMINATE TO AN ALTERNATE SUBSTRATE MATERIAL", filed January 7, 1999, which is also incorporated herein by reference.

The present invention relates generally to the manufacture of laminated products such as may be used for flooring, counter and table tops, and wall panels, and more specifically to systems and methods for manufacturing such products to include a liquid resistant film using a laminate material with the same or different materials independently coated on opposing sides of the laminate material.

The ability to replicate natural materials has substantially improved over the years. For example, decorative laminates have replaced natural materials in the construction of furniture, cabinets, counter tops, flooring and other surfaces. In each of these applications, a decorative surface may be applied to a core layer or substrate, namely, plywood, particle board, chipboard, medium density fiberboard, high density fiberboard, and other alternate substrate materials. Often, a backing layer is secured to the opposite side of the substrate to balance the movement of the decorative surface or provide other benefits. It is well known in the an that traditional high pressure laminates expand or contract with an increase or decrease in the environmental humidity. Moreover, it is also known that prolonged exposure of the flooring composite to liquids, for example water, such as by flooding through the sub-floor, adversely effects not only traditional laminates, but also the substrate.

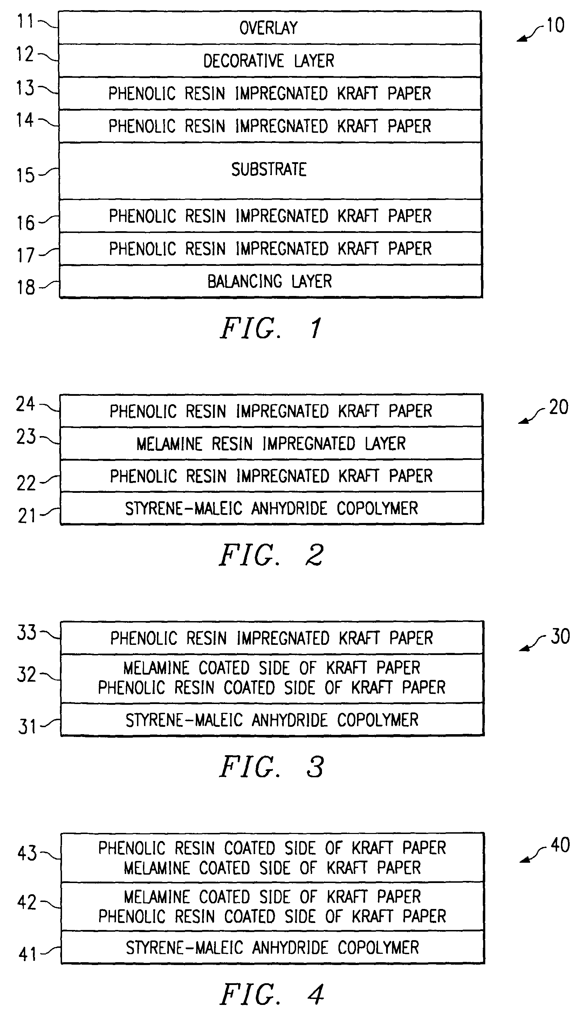

Generally the decorative surface of a laminate composite, such as a laminate flooring, is designed as shown in FIGURE 1. A high pressure laminate 10 may be comprised of a thin aluminum oxide incorporated overlay sheet 11 impregnated with a protective substance, such as melamine resin, which provides color fastness, hardness, chemical resistance, and also resistance to brief exposure to water. The high pressure laminate 10 may employ a decorative sheet 12 disposed under the overlay sheet 11, and sheets 13 and 14 of kraft paper impregnated with phenolic resin disposed below the decorative sheet.

Traditionally, the backing layer is similarly designed. As shown in FIGURE 1, the backing layer of a high pressure laminate 10 may comprise two sheets 16 and 17 of kraft paper impregnated with phenolic resin disposed below substrate 15, and a balancing layer 18 of an overlay paper impregnated with a protective substance disposed below the kraft paper sheets 16 and 17. In flooring laminates such protective substance may be a melamine resin. Typically both the backing layer and the decorative layer are bonded to substrate 15 by using a suitable adhesive.

As those of ordinary skill in the art will appreciate, the decorative and backing layers discussed above are purely exemplary and not intended to limit the description of the present invention to the above discussed structures.

After installation, such as by gluing several pieces of laminate flooring together, the decorative laminate is subject to a different environment than the backer laminate. That is, the exposed decorative laminate experiences the temperature and humidity fluctuations of the room environment. In contrast, the backer laminate, is exposed to temperature and moisture changes of the sub-floor over which the laminate flooring is applied. Moreover, prolonged exposure of the backer laminate to liquids, for example water, such as by flooding through the sub-floor, adversely effects not only the backer laminate but also the substrate. The traditional flooring panels are, however, not designed or otherwise properly adapted to compensate for the difference between the environments to which the decorative and backer laminates are exposed.

One inventive solution to prevent the penetration of moisture, such as water vapor or humidity into the backer layer, is to use a layer that is liquid impermeable, such as a styrene-maleic anhydride copolymer layer, at the bottom of the backing layer to substantially prevent the penetration of moisture, such as water, in liquid form. This inventive solution is disclosed in detail in the above referenced commonly assigned U.S. Patent Application, entitled "LAMINATE".

Although the incorporation of the liquid impermeable layer into the backer of the laminate flooring in accordance with a preferred embodiment of U.S. Patent Application, entitled "LAMINATE" provides a significant improvement in the resistance of the entire composite to standing water, the sensitivity of the decorative laminate to conditions of low humidity also increases, as in the preferred embodiment the melamine layer in the backer laminate is replaced with a liquid impermeable layer. Generally, the movement of the melamine layer 11 in conditions of low humidity may cause the flooring panel to warp with its lateral edges pointing in an upward direction (positive warpage). Such positive warpage of the flooring panel is visually obtrusive.

The backer laminate as described in the preferred embodiment in the above referenced U.S. Patent Application, entitled "LAMINATE", is comprised of the liquid impermeable layer bonded directly to an exterior surface of one of several phenolic resin impregnated kraft paper sheets. The melamine treated overlay balancing sheet is not incorporated into the backer laminate described in the preferred embodiment of the above referenced U.S. Patent Application entitled "LAMINATE" as a sufficient bond may not be achieved between the liquid impermeable layer and the melamine layer. Attempts have been made to balance and/or counteract the humidity driven movement of the decorative laminate by increasing the number and weight of the phenolic resin impregnated kraft paper sheets in the backer laminate to yield a strong backer. However, such efforts did not provide a backer strong enough to balance the movement of the decorative laminate when two or more melamine treated overlay sheets were used in the decorative laminate to improve wear resistance.

Thus, there is a need in the art for a system and method of manufacturing laminates using the advantages of the melamine balancing layer and also using the advantages offered by the liquid impermeable layer.

These and other objects, features and technical advantages are achieved by a system and method for allowing a layer having a desired characteristic, such as a balancing layer, to be used along with another layer having a desired characteristic, such as a liquid impermeable layer, in a laminate panel even though the layers providing the desired characteristics are incompatible with each other.

Accordingly in an embodiment of the present invention, preferably in order to balance the stress caused due to the movement of a protective substance in the decorative layer, for example to prevent positive warpage of the composite, and at the same time provide another desired characteristic, such as impermeability to liquids, to the composite, a balancing sheet, such as a melamine impregnated sheet, is placed in the interior of the backer laminate with the liquid impermeable layer at the outside. A third layer, such as a phenolic resin impregnated layer, providing superior bonding characteristic is placed next adjacent to the liquid impermeable layer and the balancing sheet containing the balancing substance, such as melamine, is placed next adjacent to the phenolic resin impregnated layer. Thus, the order of the sheets in the backer laminate is changed from the traditional laminate design such that the balancing sheet is no longer the outermost layer. Therefore, in this embodiment of the present invention, the melamine layer and the liquid impermeable layer are separated from each other by an intervening layer, and thus both flatness and enhanced liquid resistance may be provided to the composite employing the backer laminate.

However, it should be appreciated that the above embodiment provides a balancing layer that is at least two sheets removed from the exterior surface of the laminate. However, it may be desirable to dispose a layer having this desired characteristic in a different strata of the laminate. For example, in order to properly balance a composite having a particular characteristic material associated with the exterior of the top or decorative laminate, it may be desirable to have the balancing layer close to the bottom exterior of the backer laminate. Thus, when a laminate flooring has a melamine impregnated overlay layer as a top exterior surface of the decorative side, it is desirable to have a balancing layer of melamine as close to the bottom exterior of the laminate as possible in order to properly balance the top overlay layer.

Therefore, in an alternative embodiment of the present invention, a laminate material, such as a sheet of kraft paper, coated with a substance providing a first desired characteristic, such as a balancing substance, like melamine, on one side and another substance providing superior bonding characteristics, such as phenolic resin, on the other side may be used to provide the desired balancing characteristics. A system and method for manufacturing such a laminate material has been disclosed in detail in the above referenced commonly assigned U.S. Patent Application, entitled "SYSTEM AND METHOD FOR TWO SIDED SHEET TREATING". Thus, in this alternative embodiment, such a sheet of kraft paper may be placed adjacent to a layer providing another desired characteristic to the laminate, such as the liquid impermeable layer, with the phenolic resin coated surface next to the liquid impermeable layer and the melamine coated surface facing away from the liquid impermeable layer to thereby dispose the layer having the desired balancing characteristic at a strata very near the exterior of the laminate.

The different embodiments of the present invention as discussed above provide advantages not available in the prior art. For example, the laminate panel so constructed provides impermeability to liquids, such as water, due to the addition of the liquid impermeable layer, and balancing characteristics, thereby allowing the composite to remain substantially flat over a broader range of temperature and humidity conditions. Moreover in the alternative embodiment discussed above, the balancing substance may be placed closer to the exterior surface of the laminate as the balancing melamine layer is separated from the exterior surface of the composite by only the phenolic layer coated side of the kraft paper sheet and the liquid impermeable layer, thereby providing the desired balancing characteristics. In typical laminates, the surface to be balanced, such as the melamine impregnated overlay sheet of the decorative laminate, forms the outermost surface of the decorative laminate. Therefore, it is desirable to have the balancing substance close to the exterior of the backer laminate.

Additionally, the laminate material, such as the kraft paper sheet used in the alternative embodiment, may be saturated with a greater amount of the balancing substance, such as melamine, thereby allowing the laminate to remain flat. More melamine resin per unit area of the sheet may be provided to the laminate as kraft paper is capable of absorbing more melamine than a traditional overlay sheet used in prior art backer laminate, thereby yielding a stronger balancing layer. Thus, in the alternative embodiment, flatness is achieved by the strength of the backer laminate, that prevents the melamine layer of the decorative laminate from pulling the composite in a positive direction. A prior art overlay sheet impregnated with the balancing substance allows only a limited amount of the balancing substance to be used, and thus is not able to resist the pull of the melamine layer of the decorative laminate.

Furthermore, by using a laminate material treated on opposite surfaces with the same or different substances, the need to use a discrete balancing sheet, which is typically an expensive overlay sheet, is eliminated, thereby reducing the costs involved in producing the laminate.

Therefore, it is a technical advantage of the present invention to provide a liquid impermeable laminate for use with decorative panels, such as flooring panels.

It is another technical advantage of the present invention to provide a hydrophobic laminate with the desired balancing characteristics to prevent warping of the laminate in extreme conditions.

It is yet another technical advantage of the present invention to provide a laminate with a liquid impermeable layer and a balancing layer disposed in close proximity to the liquid impermeable layer.

It is still another technical advantage of the present invention to provide a liquid impermeable flooring laminate with a wood based substrate.

It is still another technical advantage of the present invention to provide a liquid impermeable flooring laminate having a core layer or substrate composed of an Alternate Substrate Material (ASM) and having the desired balancing characteristics.

It is a further technical advantage of the present invention to provide a water resistant flooring laminate with the balancing layer disposed at a minimum distance from the exterior of the laminate.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

For a more complete understanding of the present invention, and the advantages thereof, reference is now made to the following descriptions taken in conjunction with the accompanying drawings, in which:
FIGURE 1 is a schematic of a prior art laminate panel;
FIGURE 2 is a schematic of a backer in accordance with a first embodiment of the present invention;
FIGURE 3 is a schematic of a backer in accordance with a second embodiment of the present invention;
FIGURE 4 is a schematic of a backer in accordance with a third embodiment of the present invention;
FIGURE 5 is a schematic of a backer in accordance with a fourth embodiment of the present invention;
FIGURE 6 is a schematic of a backer in accordance with a fifth embodiment of the present invention; and
FIGURE 7 is a table showing the results of experimental testing performed on a flooring panel using the laminate of FIGURE 4.

FIGURE 2 shows a schematic of a laminate, for example a backer laminate, in accordance with an embodiment of the present invention. In the embodiment shown in FIGURE 2, laminate 20 includes a layer having a desired characteristic, such as a liquid impermeable layer 21, preferably a styrene-maleic anhydride copolymer layer. The styrene-maleic anhydride copolymer is preferably DYLARK® manufactured by NOVA Chemicals, Inc. A laminate material compatible with the layer having the desired characteristic, such as a phenolic resin impregnated kraft paper layer 22, which exhibits superior bonding with the layer having the desired characteristics, is disposed adjacent to the layer having the desired characteristic, such as the liquid impermeable layer 21.

Styrene-maleic anhydride exhibits good thermal stability, in addition to exhibiting outstanding bonding characteristics with the phenolic resin impregnated kraft paper. The excellent bonding characteristics of styrene-maleic anhydride are a result of the carboxyl groups found on the maleic anhydride of the copolymer which allows bonding to the phenolic. Therefore a number of polymers having carboxyl groups may be utilized in accordance with the present invention to provide the desired bonding characteristics to the liquid impermeable laminate. The carboxyl groups bind with the phenolic resin to produce a very stable laminate. The styrene copolymer is hydrophobic which makes it less permeable to liquids, such as water. Of course, where other materials are utilized in providing the laminate adapted according to the present invention, polymers or unsaturated monomers having other characteristics and/or chemical composition may be utilized to provide impermeability to liquids, such as water, and bonding as described above. Such polymers include α, β - unsaturated carboxylic acids, and α, β - unsaturated anhydrides, such as crotonic acid, acrylic acid, methacrylic acid, sorbic acid, cinnamic acid, maleic acid, fumaric acid, tetrahydrophthalic anhydride, dodecenyl anhydride, and alkyl substituted maleic anhydride such as dimethyl maleic anhydride. Besides styrene, olefinic monomers like ethylene, propylene, or 1-butene could be copolymerized with the above unsaturated monomers. In the alternative, polymers of the olefinic monomers such as polyethylene or polypropylene could be grafted with the unsaturated monomers listed above.

Since the liquid impermeable layer of FIGURE 2, made of styrene-maleic anhydride copolymer in a preferred embodiment, exhibits superior bonding characteristics with substances other than a substance providing a second desired characteristic in the laminate, such as a balancing material, the substance providing the second desired characteristics is moved away from the liquid impermeable layer. Thus, in the embodiment shown in FIGURE 2, the balancing layer 23, which is preferably a laminate material impregnated with a balancing substance, such as a melamine resin impregnated overlay sheet, is disposed adjacent to the phenolic resin impregnated kraft paper layer 22, away from the liquid impermeable layer 21. Thus, the embodiment shown in FIGURE 2 provides a liquid impermeable layer that prevents the penetration of moisture into the backer laminate. Additionally, in the preferred embodiment, the balancing layer 23 of the embodiment shown in FIGURE 2, provides the required balancing characteristics to the composite and balances a layer of the decorative side, such as an overlay layer of protective substance, like melamine, by counteracting the pressure exerted by the corresponding layer of the decorative laminate (not shown in the FIGURE), thus preventing warpage of the composite, i.e. causing the composite to remain substantially flat.

Typically, the thickness of the liquid impermeable layer 21 of FIGURE 2 is 5 mils and the thickness of the phenolic resin impregnated kraft paper layer varies from 7 mils to 11 mils. Therefore, in this embodiment of the present invention, the balancing layer 23, which provides the second desired characteristic, is 12-16 mils from the exterior surface of the laminate depending on the thickness of liquid impermeable layer 21, and phenolic resin impregnated kraft paper layer 22. However, it may be desirable to move the layer providing the second desired characteristics closer to or away from the exterior of the laminate depending on the particular application. For example, since the layer of protective substance in typical decorative laminates is the outermost surface on the decorative side, it may be desirable to have the balancing layer 23 of the embodiment shown in FIGURE 2, as close to the exterior surface as possible on the backer side.

Therefore, an alternative embodiment of the present invention as shown in FIGURE 3, comprises a laminate material 32, such as a kraft paper sheet, coated with a substance providing a desired characteristic, such as a balancing substance, like melamine, on one side, and a same or different substance compatible with the substances providing the desired characteristics, such as a substance exhibiting superior bonding characteristics, like phenolic resin, on the other side. Such a laminate material has been shown and described in the above referenced commonly assigned U.S. Patent Application, entitled "SYSTEM AND METHOD FOR TWO SIDED SHEET TREATING", the disclosure of which is hereby incorporated herein by reference.

In the embodiment shown in FIGURE 3, laminate 30 includes from the bottom up a liquid impermeable layer 31, a laminate material 32, such as a kraft paper sheet, coated with phenolic resin on one side and melamine resin on the other side, and another laminate material 33, such as phenolic resin impregnated kraft paper 33. In the embodiment of FIGURE 3, the phenolic resin coated side of the kraft paper sheet 32 faces the liquid impermeable layer 31, as styrene-maleic anhydride copolymer exhibits superior bonding characteristics with phenolic resin, although it does not readily adhere to melamine. The liquid impermeable layer 31 provides a first desired characteristics to the laminate, such as making the laminate substantially moisture resistant. The phenolic resin impregnated kraft paper 33 may be disposed adjacent to the melamine resin coated side of laminate material 32.

Typically the thickness of the liquid impermeable layer 31 of FIGURE 3 is 5 mils and the thickness of the melamine/phenolic resin impregnated kraft paper 32 varies from 7 mils to 11 mils depending on the type of kraft paper used. Assuming that kraft paper 32 is saturated with phenolic and melamine resin in a 1:1 ratio, the distance of melamine from the exterior surface of the laminate would vary from (5+3.5 or) 8.5 mils to (5+5.5 or) 10.5 mils. Thus, the distance of the balancing layer which provides the second desired characteristics in the embodiment of FIGURE 3, from the exterior of the surface of the exemplary embodiment may vary from 8.5 mils to 10.5 mils depending on the thickness of the liquid impermeable layer 31, which provides the first desired characteristic in the embodiment of FIGURE 3, and the thickness of the melamine/phenolic resin impregnated kraft paper layer 32. The ratio of phenolic resin and melamine resin in kraft paper 32 may be changed to increase the balancing characteristic of the sheet and reduce the bonding characteristic of the sheet, as shown in the above referenced U.S. Patent Application, entitled "SYSTEM AND METHOD FOR TWO SIDED SHEET TREATING". Thus, the distance of the balancing substance from the exterior surface of the laminate will also depend on the resin content of the kraft paper sheet 32. In this embodiment of the present invention, the balancing substance is closer to the exterior surface of the laminate then the embodiment shown in FIGURE 2. The composite is best balanced when the layer of balancing substance and the layer of protective substance are arranged symmetrically about the center of the composite.

The embodiment of the present invention as shown in FIGURE 3 provides the desired characteristics, such as impermeability to liquids and balancing characteristics, in cases where the number of protective layers on the decorative side is one. However, this embodiment may not provide the desired characteristics, such as adequate balancing characteristics, in other cases, for example, when the number of protective layers on the decorative side is more than one, such as in commercial or other high wear applications which require greater abrasion resistance. In such cases, the melamine on the protective layers in the decorative side is very strong and has an increased tendency to pull the laminate in the upward direction causing positive warping. This effect is especially pronounced under dry and low humidity conditions. Thus, it may be desirable to have a greater amount of the balancing substance in the backer or balancing side of the laminate to counteract the additional protective layers.

Therefore, in the embodiment shown in FIGURE 4 an additional layer 43 such as a kraft paper sheet, coated with a substance providing a desired characteristic, such as a balancing substance, like melamine, on one side, and a same or different substance having a desired characteristic, such as a substance exhibiting superior bonding characteristics, like phenolic resin, on the other side, is included. Laminate 40 of the illustrated embodiment of FIGURE 4 includes from the bottom up a liquid impermeable layer 41, a laminate material 42, such as a kraft paper sheet, coated with phenolic resin on one side and melamine resin on the other side, and another laminate material 43, such as a kraft paper sheet, coated with melamine resin on one side and phenolic resin on the other side. In the embodiment of FIGURE 4, the phenolic resin coated side of the kraft paper sheet 42 faces the liquid impermeable layer 41, as styrene-maleic anhydride exhibits superior bonding characteristics with phenolic resin. The liquid impermeable layer 41 provides a first desired characteristic to the laminate, such as making the laminate substantially moisture resistant. The kraft paper sheet 43 may be disposed adjacent to the laminate material 42, with the melamine side of kraft paper sheet 43 next adjacent to the melamine side of laminate material 42. In the embodiment shown in FIGURE 4, if desired, the phenolic layer may be adjacent to a substrate (not shown in the FIGURE), such as a non-wood based substrate, to allow its bonding with the substrate.

Typically the thickness of the liquid impermeable layer 41 of FIGURE 4 is 5 mils and the thickness of the melamine/phenolic resin impregnated kraft papers 42, 43 varies from 7 mils to 11 mils depending on the type of kraft paper used. Assuming that the kraft paper is saturated with phenolic and melamine resin in a 1:1 ratio, the distance of the balancing substance from the exterior surface of the laminate would vary from (5+3.5 or) 8.5 mils to (5+5.5 or) 10.5 mils. Thus, the distance of the balancing layer from the exterior surface of the laminate varies from 8.5 mils to 10.5 mils depending on the thickness of the liquid impermeable layer 41 and the thickness of the melamine/phenolic resin impregnated kraft paper layer 42. As discussed above with regard to the embodiment disclosed in FIGURE 3, the ratio of phenolic and melamine resin may be changed. Thus, the distance of the balancing substance from the exterior surface of the laminate will also depend on the resin content of the kraft paper sheet 42.

It is desirable that the laminate of FIGURE 4 have more melamine than the laminate of FIGURE 3 in order to properly balance the multiple protective layers on the decorative side and to keep the composite flat. Prior art backers use special overlay type sheets that are impregnated with melamine resin. However, the kraft paper sheet with phenolic resin on one side and melamine resin on the other side has been adapted to incorporate a desired amount of melamine as discussed in the above referenced U.S. Patent Application, entitled "SYSTEM AND METHOD FOR TWO SIDED SHEET TREATING". Although in the preferred embodiment, only half of the kraft paper is impregnated with melamine, the amount of the melamine may be increased depending on the particular application. An advantage of the embodiment as illustrated in FIGURE 4, is that as the kraft paper provides more resin per sheet than a traditional overlay sheet impregnated with melamine resin, a greater amount of the balancing substance is included in the backer laminate. Furthermore, in the embodiment of FIGURE 4, two layers of such two side treated kraft paper sheets are being used to provide better balancing characteristics, such as by providing more strength and stiffness, to balance the multiple protective layers of the decorative side. Thus, in this embodiment, the flatness of the composite is maintained under both high and low humidity conditions due to the heavy concentration of melamine in the backer laminate. Furthermore, the laminate so produced is moisture resistant and does not warp in flooding or sitting water due to the presence of the liquid impermeable layer.

Although the embodiment of FIGURE 4 has been described with the melamine side of kraft paper 42 facing the melamine side of kraft paper 43, in alternative embodiments kraft paper 43 may be inverted so that the phenolic side of kraft paper 43 faces the melamine side of kraft paper 42 to give a balanced laminate.

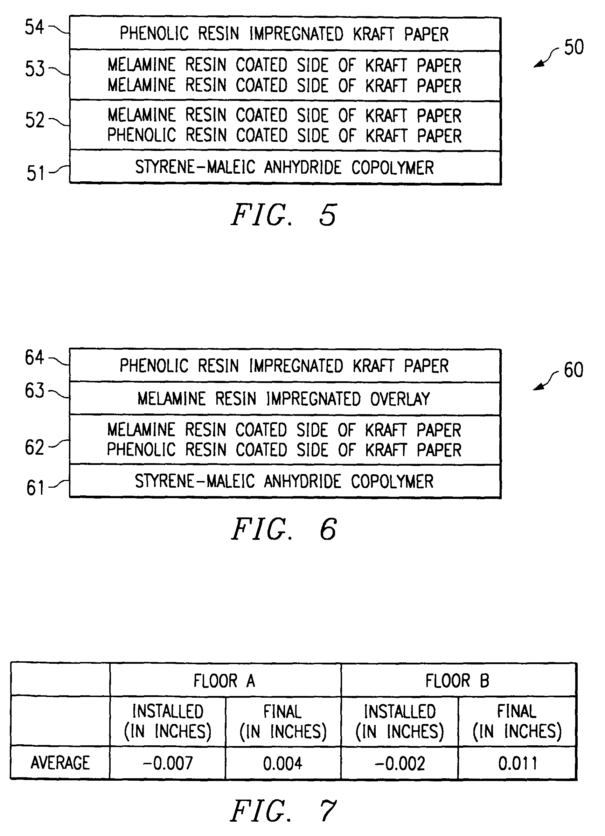

FIGURE 5 shows an alternate embodiment of the laminate of the embodiment of the present invention illustrated in FIGURE 4 in which the phenolic/melamine layer 43 of FIGURE 4 has been substituted with a melamine/melamine layer 53. Laminate 50 of the illustrated embodiment of FIGURE 5 includes from the bottom up a liquid impermeable layer 51, a laminate material 52, such as a kraft paper sheet, coated with phenolic resin on one side and melamine resin on the other side, and another laminate material 53, such as a kraft paper sheet, coated with melamine resin on both sides. In the embodiment of FIGURE 5, the phenolic resin coated side of the kraft paper sheet 52 faces the liquid impermeable layer 51, as styrene-maleic anhydride exhibits superior bonding characteristics with phenolic resin, although it does not readily adhere to melamine. Another kraft paper sheet 53 coated on both sides with melamine resin may be disposed next adjacent to the melamine coated side of laminate material 52. If desired, additional layers of kraft paper 54 impregnated with phenolic resin may be disposed on top of layer 53. In alternative embodiments, the additional layer 54 may be impregnated with other resins or may not be present without departing from the spirit of the present invention.

The two sided coated sheet 53 coated with the same substance, such as melamine, on both sides, as discussed above, eliminates the need to use overlay type sheets impregnated with melamine in order to balance the overlay type sheets of the decorative side. Typically the overlay type sheets are more expensive than the kraft paper sheet. Thus, an advantage of the embodiment of FIGURE 5 of the present invention is that the cost of producing the liquid impermeable laminates is reduced. Furthermore, the amount of the balancing substance may be controlled depending on the amount desirable to balance the overlay type melamine impregnated sheet of the decorative side. Thus, the amount of the impregnated melamine may be increased or reduced depending on the particular application.

FIGURE 6 shows an alternate embodiment of the laminate of the present invention illustrated in FIGURE 5 in which the melamine/melamine layer 53 of FIGURE 5 has been substituted with a traditional melamine impregnated overlay sheet 63. Thus, laminate 60 of the illustrated embodiment of FIGURE 6 includes from the bottom up a liquid impermeable layer 61, a laminate material 62, such as a kraft paper, coated with phenolic resin on one side and melamine resin on the other side, and another laminate material 63, such as a melamine resin impregnated overlay sheet. In alternative embodiments, any sheet suitable for impregnation with a resin, such as a melamine resin, may be used as laminate material 63. In the embodiment of FIGURE 6, the phenolic resin coated side of the kraft paper sheet 62 faces the liquid impermeable layer 61, as styrene-maleic anhydride exhibits superior bonding characteristics with phenolic resin, although it does not readily adhere to melamine. A melamine impregnated overlay 63 may be disposed next adjacent to the melamine side of laminate material 62. If desired, additional layers of kraft paper 64 impregnated with phenolic resin may be disposed on top of layer 63. In alternative embodiments, the additional layer 64 may be impregnated with other resins or may not be present without departing from the spirit of the present invention.

Experimentation has revealed that the embodiments of the laminates of the present invention as discussed above provide improved balancing characteristics. The effect of the addition of the melamine balancing sheet to the backer laminate is shown in the table of FIGURE 7. In conducting the experiment, two 7'x5' floors were installed over a particle board subfloor set-up in an environmentally controlled chamber. The panels making up each floor were bonded together using urethane adhesive. The first flooring A employed a backer laminate designed as shown in FIGURE 4, comprising a layer of styrene-maleic anhydride copolymer, one sheet of phenolic/melamine double treated kraft paper with the phenolic treated surface adjacent to the styrene-maleic anhydride copolymer layer, a second sheet of phenolic/melamine double treated kraft paper with the melamine treated surface facing the melamine treated surface of the first sheet, and the phenolic treated surface of the second kraft paper adjacent to a substrate. The second flooring B employed a backer laminate comprising a layer of styrenemaleic anhydride copolymer and three sheets of 140 lb kraft paper treated with phenolic resin. The installed and final warpage of the different flooring panels is shown in the table of FIGURE 7. In the table of FIGURE 7, a negative value indicates that the flooring panel is curved downward toward the subfloor. A positive value indicates that the flooring panel is curved upward away from the subfloor. All values are denoted in inches.

The temperature inside the chamber was maintained at 70°F and the relative humidity maintained at 50% from day 0 to day 3. On day 3 a cycling process was started inside the humidity chamber in which the temperature and humidity were changed four times a day. The temperature and relative humidity maintained inside the chamber was 110°F, 0% rH for 7 hours; 70°F, 30% rH for 5 hours; 50°F, 95% rH for 7 hours; and 70°F, 30% for 5 hours each day on days 3-6. On day 7, the temperature was changed back to 70°F and the relative humidity set to 50%. The results of the experimentation are shown in the table of FIGURE 7.

It was observed that panels of flooring B comprising of the styrene-maleic anhydride copolymer layer demonstrated less negative warping on day 0, as indicated by the average value in the 'INSTALLED" column in the table of FIGURE 7. On the other hand, panels of flooring A comprising of an embodiment of the laminate shown in FIGURE 4 demonstrated more negative warping on day 0. Furthermore, the panels of flooring A comprising of the laminate of the present invention demonstrated lesser positive warping as compared to panels of flooring B comprising of the liquid impermeable layer with no balancing layer on day 7, as indicated by the average value in the "FINAL" column in the table of FIGURE 7. Positive warpage of the composite is undesirable as the seams between the planks lift upward becoming visually unpleasant. This gives the impression that the surface is cracked and thus, hurts the appearance of the surface. Flooring composite B demonstrated more positive warpage as compared to flooring composite A. Moreover, the positive cupping of flooring B was physically observable, whereas the cupping of flooring A was not visible. Thus, it should be clear that the embodiments of the laminates of the present invention as discussed above provide improved balancing characteristics.

As mentioned above, flooring A, comprising the backer of the embodiment of FIGURE 4 of the present invention, demonstrated more, and consistent, negative warping on or before installation than flooring B, of more conventional design. Accordingly, the flooring, or other laminates, manufactured according to a preferred embodiment of the present invention may be reliably produced to result in consistent negative warping. This negative warping is not generally noticeable to the casual observer. However, in contrast, even small amounts of positive warping seem to be detectable under typical circumstances in which laminated products are installed. Moreover, under severe environmental conditions, laminated products such as the preferred embodiment flooring products tend to warp in the positive direction. Accordingly, providing a consistent small amount of negative warping in such a laminate may be relied upon to counteract such later positive warping and thereby provide a superior product as the observable positive warping may be avoided or eliminated. In a preferred embodiment, therefore, an amount of the balancing substance, such as melamine, is determined which, due to its characteristics, provides the aforementioned initial negative warping in a laminate. For example, using two layers of melamine balancing material has been found to provide the consistent and slight negative warping described above.

The different embodiments of the present invention as discussed above are considered to be exemplary of backer laminates that may be used in accordance with the present invention. Decorative layers may take various forms and employ laminate layers in a variety of combinations. As such, the layers of the backer laminate as discussed above may be varied to complement changes in the decorative layer without departing from the spirit of the present invention. Moreover, the liquid impermeable layer and the balancing layer of the present invention as discussed above may be used without corresponding use of a decorative layer and/or substrate, if desired. For example, a panel having a liquid impermeable layer on one or all sides and a balancing layer may be utilized in any of a number of orientations to provide a surface which is liquid impermeable and does not warp, where a corresponding decorative layer may not be desired.

The prior art laminates use wood based materials such as plywood, particle board, chipboard, medium density fiberboard, high density fiberboard, etc. as substrate. Although the different embodiments of the present invention as discussed above may be used with any kind of substrates, such as wood based and non-wood based substrates, the present invention is especially useful for use with substrates made from Alternate Substrate Materials (ASM). Such ASM may include non-wood cores or substrates, such as synthetic or non-cellulose substrate material, for example, recycled plastic substrates, ABS/PC, nylon, PVC, polystyrene, any olefins, or like materials alone or in combination with like or unlike materials, such as calcium carbonate, magnesium hydroxide, talc, clays, glass fiber, carbon fibers, fire retardants, smoke suppressors, wollastonite, if desired. The lack of stiffness of the non-wood based substrates makes the use of different embodiments of the laminates as discussed above more desirable to provide the desired characteristics, such as strength and balancing, to the laminates than the traditional laminates using wood based substrates.

In the different embodiments of the present invention as discussed above, the balancing layer is moved away from the exterior surface towards the inside of the laminate as the liquid impermeable layer does not readily adhere to the balancing layer of the example materials described above. However, the invention is not so limited and in alternative embodiments, the layer providing the first desired characteristic and the layer providing the second desired characteristic may be moved away or closer to the exterior surface of the laminate. For example, the liquid impermeable layer may be moved away from the exterior surface towards the inside of the laminate without departing from the spirit of the present invention. Thus, a laminate material coated with melamine resin on one side and phenolic resin on the other side may be the outermost layer with the melamine layer facing outside. The liquid impermeable layer may then be disposed next adjacent to the phenolic resin coated surface of the laminate material. Moreover, more than two sheets of laminate material coated with a substance, providing a desired characteristic, on one side and a different or same substance, providing a desired characteristic, on the other side may be used, without departing from the spirit of the present invention. Additionally, the various layers may be used to provide characteristics or functions different from those described above. Thus, the present invention may be used to provide a structure with good bonding having desired characteristics even when materials having these characteristics do not readily bond.

It shall be appreciated by those skilled in the art, that although the embodiments of the present invention have been described above with regard to a liquid impermeable layer and a balancing layer, the invention is not so limited and the teachings of the present invention may be used in any situation where it is desirable to have two substances close to each other and the two substances are incapable of adhering to each other. Moreover, although the embodiments have been discussed with regard to backer laminates, the present invention may be used for the decorative side of the laminates.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A laminate for use in an end product, comprising:
a first layer of a first substance providing a first desired characteristic in the end product;
a second layer of a second substance providing a second desired characteristic in the end product, wherein the first and second substances are incompatible with each other in at least one aspect, and wherein the first and second layers are in close proximity to each other; and
a third layer of a third substance, wherein the third substance is compatible with at least one of the first and second substances, and wherein the third layer is disposed between the first and second layers to allow their disposition in close proximity to each other.

2. The laminate of claim 1, wherein the third substance is also compatible with the other one of the first and second substances.

3. The laminate of claim 1 or 2, wherein the incompatible aspect is a bonding characteristic.

4. The laminate according to any of the preceding claims, wherein the first desired characteristic in the end product is a water resistant characteristic.

5. The laminate according to any of the preceding claims, wherein the first substance is styrene-maleic anhydride copolymer which substantially prevents the penetration of moisture into the end product.

6. The laminate according to any of the preceding claims, further comprising a fourth layer, wherein the second desired characteristic in the end product is consistent with non-structural characteristics of the fourth layer of the end product.

7. The laminate according to any of the preceding claims, further comprising a fourth layer, wherein the second substance is melamine resin which balances a fourth substance in a fourth layer of the end product.

8. The laminate according to any of the preceding claims, wherein the end product is selected from a flooring panel, a counter top, a table top, an exterior wall, an interior wall, a siding, a roof top, a facade boarding, and a work top.

9. The laminate according to any of the preceding claims, wherein the third substance is phenolic resin, which bonds readily with the first substance and the second substance.

10. The laminate according to any of the preceding claims, wherein the second substance and the third substance are coated on opposing surfaces of a first laminate material.

11. The laminate according to claim 10, wherein the fast laminate material is a kraft paper sheet.

12. The laminate according to claim 11, wherein the distance of the second layer from the first layer is dependent in part on a selected penetration level of the second substance into the kraft paper sheet.

13. The laminate according to any of claims 10 to 12, further comprising a second laminate material coated with the second substance and the third substance on opposing surfaces.

14. The laminate according to claim 13, wherein The second laminate material is positioned adjacent to the first laminate material with The second substance-coated surface of the second laminate material facing The second substance-coated surface of the first laminate material.

15. The laminate according to any of claims 10 to 12, further comprising a second laminate material coated with the second substance on both surfaces, wherein the second laminate material is positioned adjacent to the second substance coated surface of the first laminate material.

16. The laminate according to any of claims 13 to 15, wherein the second laminate material is a kraft paper sheet.

17. The laminate according to any of claims 13 to 15, wherein the second laminate material is an overlay sheet.

18. The laminate according to any of claims 13 to 15, wherein the second laminate material is a sheet suitable for saturation with a resin.

19. The laminate according to claim 18, wherein The resin is a phenolic resin or a melamine resin.

20. The laminate according to any of the preceding claims, further comprising a fourth layer and a decorative layer positioned adjacent to the fourth layer between the fourth layer and the second layer.

21. The laminate according to claim 20, further comprising a substrate positioned between the decorative layer and the second layer.

22. The laminate according to claim 21, wherein the substrate is a non-wood based substrate.

23. The laminate according to any of the preceding claims, wherein the first and second substances are desired to be disposed in the laminate at the same desired strata.

24. A method of producing a laminate, comprising the steps of:
determining a first characteristic to be imparted to the laminate;
selecting a first substance to impart the first characteristic to the laminate;
determining a second characteristic to be imparted to the laminate;
selecting a second substance to impart the second characteristic to the laminate, wherein the first substance providing the first characteristic and the second substance providing the second characteristic are not compatible with each other with respect to at least one aspect;
providing a first layer comprising the first substance and a second layer comprising the second substance in close proximity to each other; and
selecting a third substance compatible with at least one of the first and second substances, wherein a third layer of the third substance is positioned between the first layer and the second layer.

25. The method according to claim 24, wherein the third substance is also compatible with the other of the first and second substances.

26. The method according to either of claims 24 or 25, wherein the third substance readily bonds with at least one of the first and second substances.

27. The method according to any of claims 24 to 26, wherein the third substance providing the bonding characteristic is phenolic resin.

28. The method according to any of claims 24 to 27, wherein the first substance is a copolymer of a first monomer and a second monomer.

29. The method according to claim 28, wherein the first monomer is selected from the group consisting of ethylene, propylene, and 1-butene.

30. The method according to either of claims 28 or 29, wherein the second monomer is an unsaturated monomer selected from an α, β - unsaturated carboxylic acid and an α, β - unsaturated anhydride.

31. The method according to claim 30, wherein the α, β - unsaturated anhydride is selected from tetrahydrophthalic anhydride, dodecenyl anhydride, and dimethyl maleic anhydride.

32. The method according to claim 30, wherein the α, β - unsaturated carboxylic acid is selected from crotonic acid, acrylic acid, methacrylic acid, sorbic acid, cinnamic acid, maleic acid, and fumaric acid,

33. The method according to any of claims 24 to 27, wherein the first substance is a substance produced by grafting an α, β - unsaturated acid onto a polymer selected from polyethylene, polypropylene, and polybutylene.

34. The method according to any of claims 24 to 27, wherein the first characteristic to be imparted to the laminate is liquid impermeability.

35. The method according to claim 34, wherein the first substance providing the liquid impermeability is styrene-maleic anhydride copolymer.

36. The method according to any of claims 24 to 35, wherein the second characteristic to be imparted to the laminate is a balancing characteristic.

37. The method according to claim 36, wherein the second substance providing the balancing characteristic is melamine resin.

38. The method according to any of claims 24 to 37, further comprising the step of determining a third characteristic to be imparted by a fourth substance to the laminate, wherein the second substance balances the third characteristic of the laminate.

39. The method according to claim 38, wherein the fourth substance is melamine resin.

40. The method according to either of claims 38 or 39, wherein the third characteristic is a protective characteristic provided by the fourth substance to protect the laminate from external factors.

41. The method according to any of claims 24 to 40, wherein the first substance does not readily bond with the second substance.

42. The method according to any of claims 24 to 41, wherein the step of selecting a third substance further comprises determining an amount of the second substance to coat a first side of a first laminate material to impart the second characteristic to the laminate; and
coating the first side of the first laminate material with the determined amount of the second substance.

43. The method according to claim 42, further comprising the steps of:
determining an amount of the third substance to coat a second side of the first laminate material to impart the compatible characteristic to the first laminate material; and
coating the second side of the first laminate material with the determined amount of the third substance.

44. The method according to either of claims 42 or 43, further comprising the step of positioning the first laminate material with the third substance coated side of the first laminate material facing the first layer of the laminate.

45. The method according to any of claims 42 to 44, further comprising the steps of:
coating a first side of a second laminate material with the second substance to provide the second characteristic to the laminate; and
coating a second side of the second laminate material with the third substance.

46. The method according to claim 45, further comprising the step of positioning the second laminate material with the second substance coated side of the second laminate material facing the second substance coated side of the first laminate material.

47. The method according to any of claims 42 to 44, further comprising the step of:
coating a second laminate material with the second substance on both surfaces, wherein the second laminate material is positioned adjacent to the second substance coated surface of the first laminate material.

48. The method according to any of claims 45 to 47, wherein the second laminate material is a kraft paper sheet.

49. The method according to any of claims 45 to 47, wherein the second laminate material is an overlay sheet.

50. The method according to any of claims 45 to 47, wherein the second laminate material is a sheet suitable for saturation with a resin.

51. The method according to claim 50, wherein the resin is phenolic resin or melamine resin.

52. The method according to any of claims 24 to 51, further comprising the step of:
determining an amount of the second substance to provide a desired physical attribute in the laminate when produced including the first substance, the second substance and the third substance.

53. The method according to claim 52, wherein the physical attribute is a negative warping of the laminate.

54. The method according to claim 53, wherein the negative warping is predictably achieved without requiring adjustment of characteristics of other layers of the laminate.

55. A flooring panel, comprising:
a first layer of a protective substance to protect the flooring panel from external factors;
a second decorative layer positioned adjacent to the first layer to provide a desired decorative surface to the flooring panel;
a third layer of phenolic resin impregnated kraft paper, wherein the second decorative layer is positioned between the third layer and the first layer;
a fourth layer of kraft paper;
a fifth layer of a balancing substance, wherein the fifth layer balances the first layer of the protective substance, and wherein the fourth layer is positioned between the third layer and the fifth layer;
a sixth layer of a liquid impermeable substance, wherein the liquid impermeable substance does not readily adhere to the balancing substance, and wherein the fifth layer and the sixth layer are in close proximity to each other; and
a seventh layer of a bonding substance, wherein the bonding substance readily adheres to both of the balancing substance and the liquid impermeable substance, and wherein the seventh layer is positioned between the sixth layer and the fifth layer.

56. The flooring panel according to claim 55, further comprising a substrate positioned between the third layer and the fourth layer.

57. The flooring panel according to claim 56, wherein the substrate is a wood based substrate.

58. The flooring panel according to claim 57, wherein the wood based substrate comprises plywood, particle board, chipboard, medium density fiberboard, or high density fiberboard.

59. The flooring panel according to claim 56, wherein the substrate is a non-wood based substrate.

60. The flooring panel according to claim 59, wherein the non-wood based substrate comprises recycled plastic, acrylonitrile-c-butadiene-c-styrene (ABS), nylon, polystyrene, an olefin or PVC.

61. The flooring panel according to either of claims 59 or 60, wherein the non-wood based substrate comprises an inorganic filler.

62. The flooring panel according to any of claims 56 to 61, further comprising an eighth layer of phenolic resin impregnated kraft paper, wherein the eighth layer is positioned between the third layer of phenolic resin impregnated kraft paper and the substrate.

63. The flooring panel according to any of claims 55 to 62, wherein the fifth layer of balancing substance and the seventh layer of bonding substance are coated on opposing surfaces of a kraft paper sheet.

64. The flooring panel according to claim 63, wherein the distance of the fifth layer from the sixth layer is dependent in part on the penetration level of the balancing substance into the kraft paper sheet.

65. The flooring panel according to any of claims 62 to 64, further comprising a ninth layer of a protective substance to provide enhanced protective characteristics to the flooring panel, and wherein the ninth layer is positioned between the first layer and the second layer.

66. The flooring panel according to any of claims 55 to 65, wherein the fourth layer is coated with the balancing substance and the bonding substance on opposite surfaces, wherein the balancing substance coated surface of the fourth layer faces the fifth layer.

67. The flooring panel of claim 66, wherein the fourth layer is coated with the balancing substance on both surfaces.

68. The flooring panel according to any of claims 55 to 67, wherein the fourth layer is impregnated with phenolic resin.

69. The flooring panel according to any of claims 65 to 68, further comprising a tenth layer of melamine resin impregnated overlay sheet, wherein the tenth layer is positioned between the fourth layer and the fifth layer.

70. The flooring panel according to any of claims 55 to 69, wherein the protective substance is melamine resin.

71. The flooring panel according to any of claims 55 to 70, wherein the balancing substance is melamine resin.

72. The flooring panel according to any of claims 55 to 71, wherein the liquid impermeable substance is styrene-maleic anhydride copolymer.

73. The flooring panel according to any of claims 55 to 72, wherein the bonding substance is phenolic resin.

74. The flooring panel according to any of claims 55 to 73, wherein the fifth and sixth layers are desired to be disposed at the same location in the flooring panel.

75. A flooring panel, comprising:
a first layer of a protective substance to protect the flooring panel from external factors;
a second layer of a balancing substance, wherein the second layer balances the first layer of the protective substance;
a third layer of a substance providing liquid impermeable characteristics, wherein the substance does not readily adhere to the balancing substance, and wherein the second layer and the third layer are in close proximity to each other; and
a fourth layer of a bonding substance, wherein the bonding substance readily adheres to both of the balancing substance and the liquid impermeable substance, and wherein the fourth layer is positioned between the second layer and the third layer.

76. The flooring panel according to claim 75, further comprising a substrate positioned between the first layer and the second layer.

77. The flooring panel according to claim 76, wherein the substrate is a wood based substrate.

78. The flooring panel according to claim 76, wherein the substrate is a non-wood based substrate.

79. The flooring panel according to any of claims 75 to 78, wherein the second layer of balancing substance and the fourth layer of bonding substance are coated on opposing surfaces of a kraft paper sheet.

80. The flooring panel according to any of claims 76 to 79, further comprising a fifth layer of a protective substance to provide enhanced protective characteristics to the flooring panel, and wherein the fifth layer is positioned between the first layer and the substrate.

81. The flooring panel according to claim 80, further comprising a sixth layer of a kraft paper sheet wherein the sixth layer is coated with the balancing substance and the bonding substance on opposite surfaces, wherein the balancing substance coated surface of the sixth layer faces the second layer.

82. The flooring panel according to any of claims 75 to 81, wherein the protective substance is melamine resin.

83. The flooring panel according to any of claims 75 to 82, wherein the balancing substance is melamine resin.

84. The flooring panel according to any of claims 75 to 83, wherein the substance providing liquid impermeable characteristics is styrene-maleic anhydride copolymer.

85. The flooring panel according to any of claims 75 to 84, wherein the bonding substance is phenolic resin.

86. The flooring panel according to any of claims 75 to 85, wherein the fifth and sixth layers are desired to be disposed at the same location in the flooring panel.

87. The flooring panel according to any of claims 81 to 86, further comprising a seventh decorative layer positioned adjacent to the first layer to provide a desired decorative surface to the flooring panel; and
an eighth layer of phenolic resin impregnated kraft paper, wherein the seventh decorative layer is positioned between the first layer and the eighth layer.

88. A decorative panel for use as a flooring, comprising:
a decorative layer; and
a backing layer complementary to the decorative layer, wherein the backing layer includes:
a first liquid impermeable sub-layer to substantially prevent the penetration of moisture;
a second layer of a balancing agent to balance at least one sub-layer of the decorative layer, wherein the first and second layers are close to each other and do not readily bond with each other; and
a third layer of a bonding agent, wherein the bonding agent bonds readily with at least one of the first and second layers, and wherein the third layer is disposed between the first and second layers.

89. The decorative panel according to claim 88, wherein the liquid impermeable sub-layer is a styrene-maleic anhydride copolymer layer.

90. The decorative panel according to either of claims 88 or 89, wherein the balancing agent is melamine resin.

91. The decorative panel according to any of claims 88 to 90, wherein the second layer is a melamine impregnated overlay sheet.

92. The decorative panel according to any of claims 88 to 91, wherein the second layer and the third layer are opposing surfaces of a kraft paper sheet, wherein the balancing agent is melamine resin and the bonding agent is phenolic resin.

93. The decorative panel of claim 92, wherein the phenolic resin coated surface of the kraft paper sheet is attached to the liquid impermeable sub-layer.

94. The decorative panel according to claim 92, wherein the phenolic resin coated side of the kraft paper sheet faces the first liquid impermeable sub-layer.

95. The decorative panel according to any of claims 88 to 94, further comprising a fourth kraft paper sheet impregnated with phenolic resin, wherein the fourth kraft paper sheet is positioned adjacent to the second layer away from the first liquid impermeable sub-layer.

96. The decorative panel according to claim 95, further comprising a fifth balancing layer, wherein the second layer of balancing agent is positioned between the fifth balancing layer and the first liquid impermeable sub-layer.

97. The decorative panel according to claim 96, wherein the fifth balancing layer is a kraft paper sheet coated with melamine resin on one side and phenolic resin on the other side.

98. The decorative panel according to claim 97, wherein the melamine resin coated side of the fifth balancing layer is attached to the melamine coated side of the second balancing layer.

99. The decorative panel according to any of claims 88 to 98, wherein the bonding agent is phenolic resin.

100. The decorative panel according to any of claims 88 to 99, further comprising a kraft paper sheet impregnated with phenolic resin, wherein the kraft paper sheet is positioned adjacent to the second layer of balancing agent away from the third layer of a bonding agent.

101. A method of producing a laminate, comprising the steps of:
selecting a first substance to impart a first desired characteristic to the laminate;
selecting a second substance to impart a second desired characteristic to the laminate, wherein the first substance and the second substance are not compatible with each other in at least one respect;
providing a first layer comprising the first substance and a second layer comprising the second substance in close proximity to each other;
selecting a third substance compatible with the first and second substances, wherein a third layer of the third substance is positioned between the first layer and the second layer; and
determining an amount of the second substance to provide a desired physical attribute in the laminate when produced including the first substance, the second substance and the third substance.

102. The method according to claim 101, wherein the physical attribute is a negative warping of the laminate.

103. The method according to claim 102, wherein the negative warping is predictably achieved without requiring adjustment of characteristics of other layers of the laminate.

104. The method according to any of claims 101 to 103, further comprising the step of coating a first side of a first laminate material with the determined amount of the second substance.

105. The method according to claim 104, wherein the first laminate material is a kraft paper sheet.

106. The method according to either of claims 104 or 105, further comprising the steps of:
determining an amount of the third substance to coat a second side of the first laminate material to impart the compatible characteristic to the first laminate material;
coating the second side of the first laminate material with the determined amount of the third substance; and
positioning the first laminate material with the third substance coated side of the first laminate material facing the first layer of the laminate.

107. The method according to claim 106, further comprising providing a fourth layer of a fourth substance, wherein the first laminate material balances the fourth layer.

108. The method according to claim 107, further comprising providing a fifth layer of the fourth substance, wherein the fifth layer is positioned adjacent to the fourth layer.

109. The method according to claim 108, further comprising the steps of:
coating a first side of a second laminate material with a predetermined amount of the second substance, wherein the predetermined amount of the second substance is based on a desired negative warpage to be provided to the produced laminate;
coating a second side of the second laminate material with the third substance; and
positioning the second laminate material with the second substance coated side of the second laminate material facing the second coated side of the first laminate material.

110. The method according to claim 109, wherein the second laminate material is suitable for saturation with a resin.

111. The method according to any of claims 101 to 110, wherein the first desired characteristic is impermeability to liquids.

112. The method according to any of claims 101 to 111, wherein the second desired characteristic is a balancing characteristic.

113. The method according to any of claims 101 to 112, wherein the first substance is styrene-maleic anhydride copolymer.

114. The method according to any of claims 101 to 113, wherein the second substance is melamine resin.

115. The method according to any of claims 101 to 114, wherein the third substance is phenolic resin.

116. The method according to any of claims 101 to 115, wherein the fourth substance is melamine resin.
